(19) Europäisches Patentamt
European Patent Office
Office européen des brevets

(11) **EP 2 709 201 A2**

(12) **EUROPEAN PATENT APPLICATION**

(43) Date of publication:
**19.03.2014 Bulletin 2014/12**

(51) Int Cl.:
**H01M 10/44** *(2006.01)*
**H01M 10/48** *(2006.01)*
**H02J 7/00** *(2006.01)*
**H01M 10/42** *(2006.01)*

(21) Application number: **13004087.6**

(22) Date of filing: **16.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.09.2012 JP 2012202217**

(71) Applicant: **Hitachi Ltd.**
**Tokyo 100-8280 (JP)**

(72) Inventors:
• **Takeuchi, Takashi**
  **Tokyo, 100-8220 (JP)**
• **Miura, Masahiro**
  **Tokyo, 100-8220 (JP)**
• **Terada, Takahide**
  **Tokyo, 100-8220 (JP)**

(74) Representative: **Strehl Schübel-Hopf & Partner**
**Maximilianstrasse 54**
**80538 München (DE)**

(54) **Battery system control method**

(57)    The entire voltage of batteries is transmitted to a higher-ranking controller as information. The higher-ranking controller gives a discharge instruction or the like to a lower-ranking controller having a voltage higher than those of the other controllers. Thus, voltage variation of the respective batteries is balanced.

## FIG. 3

**Description**

CROSS-REFERENCE TO RELATED APPLICATION

This application claims the priority of Japanese Patent Application No. 2012-202217 filed September 14, 2012, which is incorporated herein by reference in its entirety.

BACKGROUND OF THE INVENTION

FIELD OF THE INVENTION

The present invention relates to a control method for a battery system that includes plural batteries, and particularly, to a battery system control method for equalization of a charged state between batteries.

BACKGROUND ART

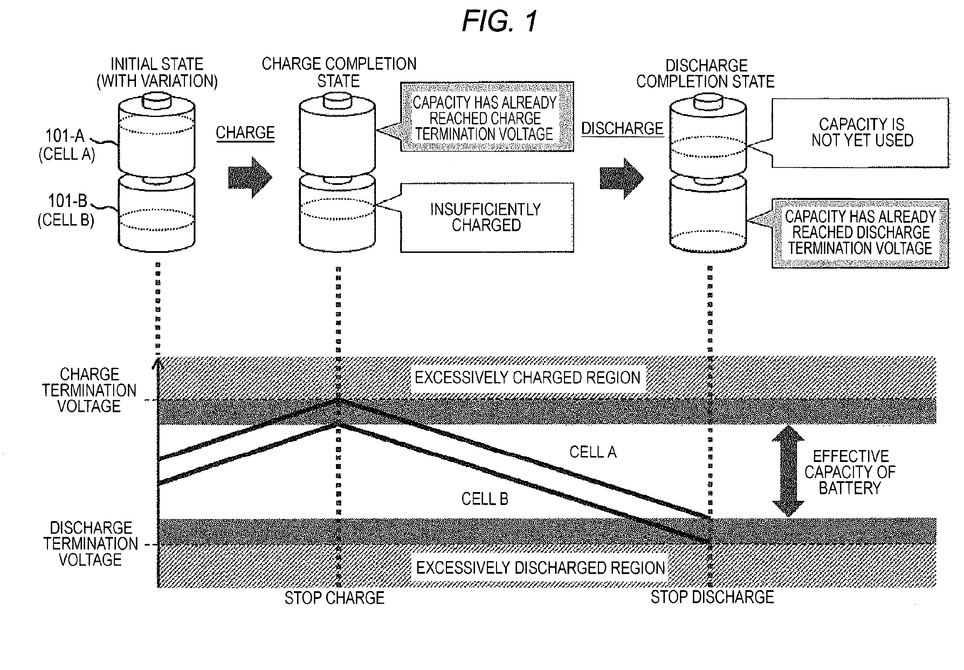

Installation of a large-scale battery system in a system or a power plant has been studied from the viewpoint of stabilization of an electric power system or a smart grid. In order to obtain output and capacity necessary for a battery system, plural battery cells are connected to each other in series and in parallel. When the battery system is charged or discharged, the same electric current flows in the respective battery cells that are connected in series. Thus, if all the battery cells have the same characteristic, no variation is generated in battery voltages. However, when the battery cells are manufactured in practice, variation is present in internal resistances, battery capacities or the like. For example, in a case where the speed of self-discharge varies every battery cell, variation is generated in cell voltages over time. As shown in Fig. 1, in a case where variation is present in voltages of the battery cells connected in series, a specific battery is excessively charged or excessively discharged. Further, if charging and discharging are stopped for prevention of the excessive charge or excessive discharge, an apparent battery capacity is reduced.

In order to solve such a problem, JP-A-2010-029050 discloses a balance control mechanism of detecting a cell or a cell group having a high voltage and performing discharging to equalize cell voltages. As shown in Fig. 2, in a battery system disclosed in JP-A-2010-029050, plural battery cells 101 are connected to each other in series to form an assembled battery 201, and the assembled batteries 201 are connected to each other in series to obtain a high voltage. In order to prevent voltage variation between the battery cells 101, a cell controller 202 detects a cell voltage by a cell voltage detection circuit 204, and transmits the detected value to a higher-ranking battery controller 208. The battery controller 208 gives a discharge instruction to the cell voltage detection circuit / cell discharge circuit control unit 204 to turn on a switch of a cell discharge circuit 203 connected in parallel to the cell on the basis of the detected cell voltage value.

Further, in order to prevent variation between the assembled batteries 201, the battery controller 208 calculates a voltage of the assembled battery 201 from the detected cell voltage, and gives a discharge instruction to an assembled battery discharge circuit control unit 207 connected to the assembled battery 201 having a high voltage value. The assembled battery discharge circuit control unit 207 that receives the discharge instruction turns on an assembled battery discharge circuit 206 to discharge the assembled battery 201, and thus, it is possible to equalize voltages between the assembled batteries 201 to prevent the voltage variation.

SUMMARY OF THE INVENTION

The above-mentioned balance control method disclosed in JP-A-2010-029050 is provided to prevent variations between cells and between assembled batteries, but it is necessary to provide two types of discharge circuits that are respectively connected in parallel to the cells and the assembled batteries to realize a balance control of the battery system. Further, since a voltage corresponding to an assembled battery voltage is applied to the module discharge circuit 206 that is connected in parallel to the assembled batteries, it is necessary to secure an insulation distance with peripheral circuits, which makes it difficult to reduce the size of a board circuit. Further, in the method disclosed in JP-A-2010-029050, it is necessary to transmit the entire cell voltage information to the higher-ranking battery controller 208. Thus, for example, a communication speed necessary in a large-scale battery system handling multiple assembled batteries is increased and interconnection to the battery controller 208 becomes difficult, which makes it difficult to apply the balance control method.

In order to solve the above problems, according to an aspect of the invention, in a battery system in which plural battery cells are connected to each other in series, in parallel or in series-parallel to form an assembled battery; each assembled battery is connected to a first-ranking controller that monitors and controls battery cells that belong to the assembled battery; the first-ranking controller includes a cell voltage measuring unit configured to individually detect an inter-terminal voltage of the battery cell, a cell balance unit configured to individually discharge the battery cells that belong to the assembled battery, a communication unit configured to transmit a minimum value or an average value of cell voltages to a higher second-ranking controller as a representative value, and a control unit configured to receive a discharge instruction from the higher second-ranking controller and giving the discharge instruction to the cell balance unit; the second-ranking controller includes a communication unit configured to obtain the representative values of the voltages from the first-ranking controllers and transmitting a minimum value or an average value thereof as a representative value to a higher third-ranking controller, and a control unit configured to receive a discharge instruction from the higher third-ranking controller and giving the discharge instruction to the lower second-ranking controllers; and the third-ranking controller includes a communication unit configured to obtain the representative values of the voltages from the second-ranking controllers and transmitting a minimum value or an average value thereof to a monitor and control device such as a personal computer as a representative value, and control unit configured to receive a discharge instruction from the higher-ranking monitor and control device and giving the discharge instruction to the lower second-ranking controllers, cell voltage information is transmitted to a higher-ranking controller in the hierarchical battery system, a discharging amount is calculated for each controller, and the discharge instruction is transmitted to the lowest-ranking controller to control a discharge circuit, thereby preventing a voltage variation between the cells and a voltage variation between the controllers.

According to this configuration, by providing hierarchical monitor and control of a battery system, it is possible to equalize cell voltages of the entire battery system by a discharge circuit that is connected in parallel to cells. Thus, it is not necessary to provide an individual balance control circuit at each rank, and to provide a circuit that operates at a high voltage.

Further, by providing hierarchical monitor of cell voltages, it is possible to transmit a representative value such as a minimum value or an average value of the cell voltages, to thereby reduce the amount of data. Thus, it is possible to prevent a large amount of cell data from being concentrated on the highest-ranking controller.

Further, since a controller at the second or higher rank does not directly measure battery cells but performs only communication and control, it is possible to extend the ranks using controllers having the same function. Thus, it is easy to make a greater capacity of the battery system.

BRIEF DESCRIPTION OF THE DRAWINGS

Fig. 1 is a diagram illustrating a charged and discharged state when variation is present in voltages of battery cells.

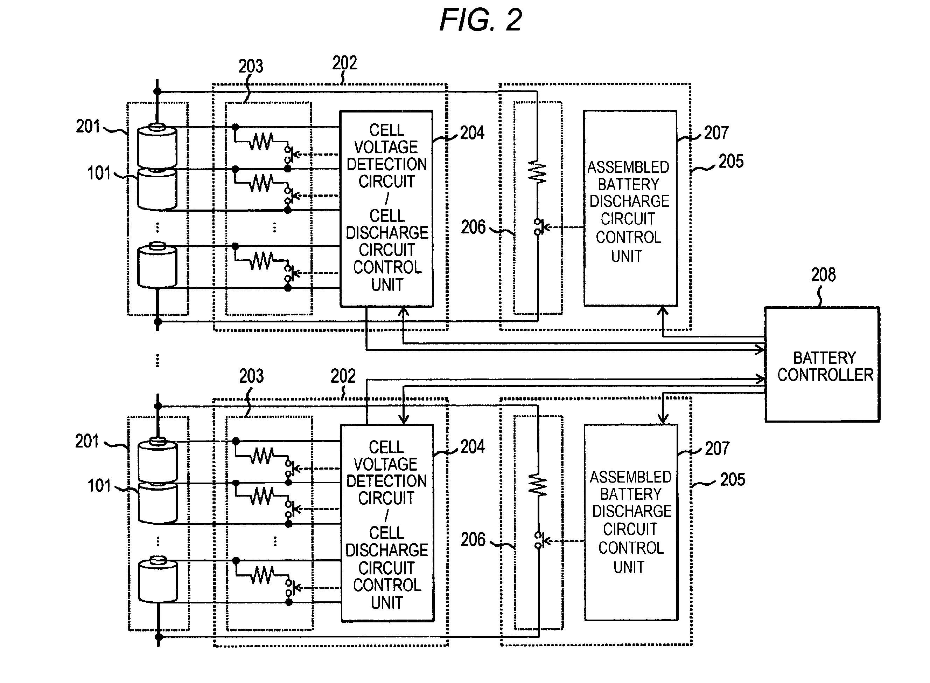

Fig. 2 is a diagram illustrating a battery system in the related art.
Fig. 3 is a conceptual diagram of a hierarchical control battery system to which an embodiment of the invention is applicable.
Fig. 4 is a diagram illustrating Example of a hierarchical control battery system to which an embodiment of the invention is applied.
Fig. 5 is a balance control flow in a hierarchical battery system.
Fig. 6 is a balance control flow of Example 2.
Fig. 7 is a diagram illustrating a specific example of a control of Example 2.
Fig. 8 is a balance control flow of Example 3.
Fig. 9 is a diagram illustrating a specific example of a control of Example 3.
Fig. 10 is a balance control flow of Example 4.
Fig. 11 is a diagram illustrating a specific example of a control of Example 4.
Fig. 12 is a balance control flow of Example 5.

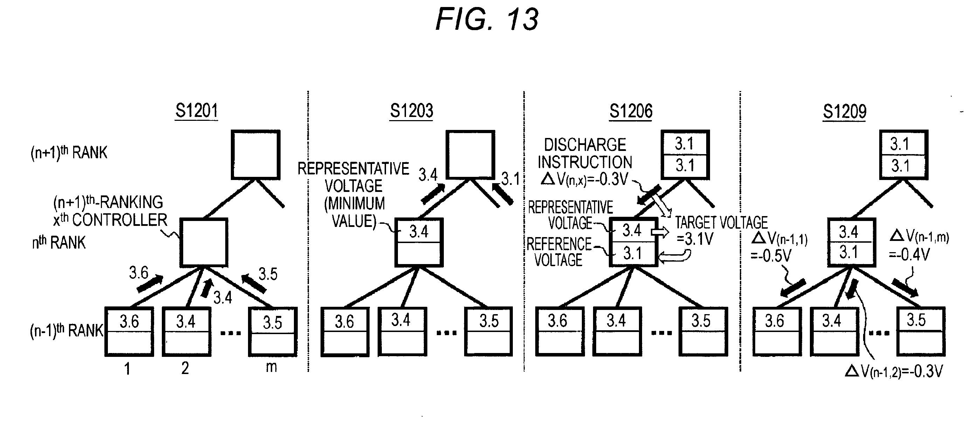

Fig. 13 is a diagram illustrating a specific example of a control of Example 5.

DETAILED DESCRIPTION OF THE INVENTION

Example 1

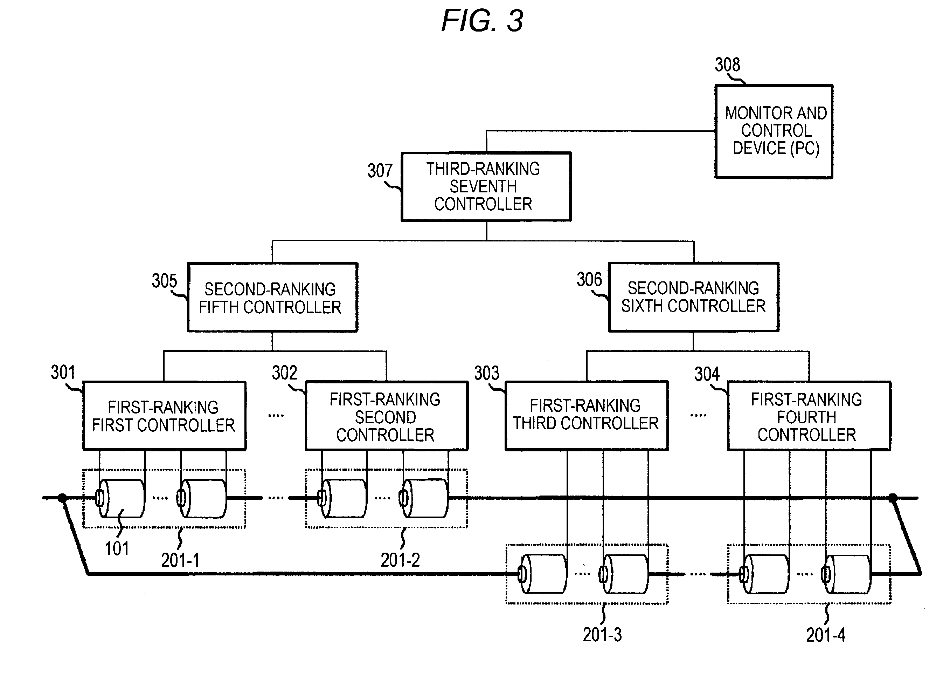

Fig. 3 is a conceptual diagram of a battery system that includes three ranks, for description of a hierarchical control battery system shown in Example 1.

Plural battery cells 101 are connected to each other in series, in parallel, or in series-parallel, to form first to fourth assembled batteries 201-1 to 201-4. In order to equalize voltages between the battery cells 101, first-ranking controllers 301 to 304 are respectively connected to the first to fourth assembled batteries 201-1 to 201-4 to monitor a voltage of each battery cell 101, thereby performing a balance control. A second-ranking controller obtains voltage information from the plural first-ranking controllers, and gives a balance control instruction to the first-ranking controllers.

A third-ranking controller obtains voltage information from the plural second-ranking controllers, and gives a balance control instruction to the second-ranking controllers.

A monitor and control device 308 that is capable of displaying a state of a battery system, such as a personal computer, is connected above the third rank, to form a single battery system as a whole.

By hierarchically configuring the control of the battery system without detection of all cell voltages by one controller, it is possible to make a greater capacity of the battery system while preventing plural pieces of cell voltage data from being concentrated on the battery controller of a higher rank.

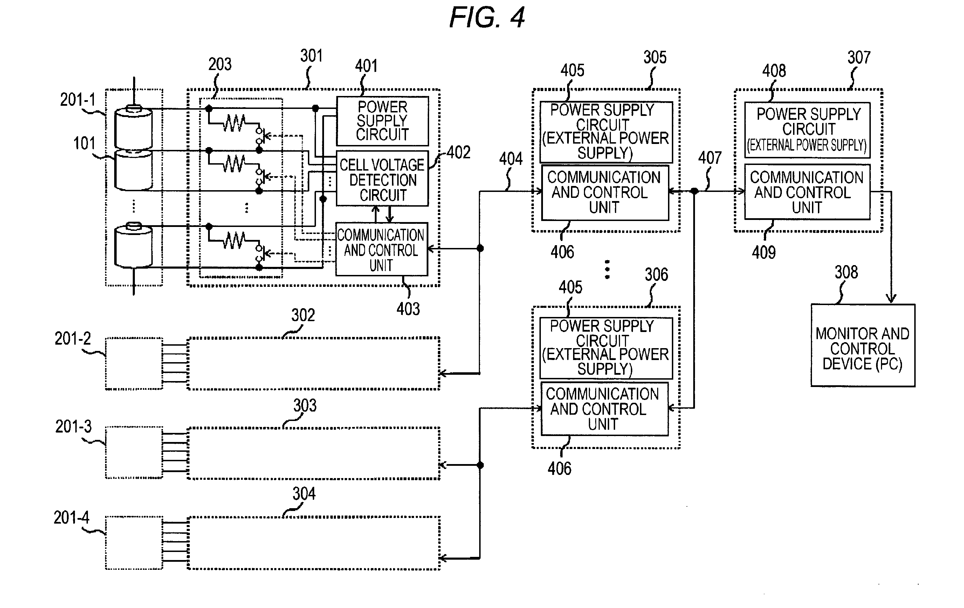

Fig. 4 is a diagram illustrating a configuration of each controller for realization of the hierarchical control battery system.

The plural battery cells 101 are connected to each other in series, in parallel, or in series-parallel, to form the assembled battery 201. The assembled batteries 201 are respectively connected to the first-ranking controllers 301 to 304 for monitoring and control of the respective battery cells 101 that belong to the assembled batteries 201.

The first-ranking controller 301 includes a power supply circuit 401 that generates electric power from the assembled battery 201-1; a cell voltage detection circuit 402 configured to individually detect an inter-terminal voltage of the battery cells; a cell balance unit 203 configured to individually discharge the battery cells 101 that belong to the assembled battery 201-1; and a communication unit that transmits a minimum value or an average value of the cell voltages to the higher second-ranking controller 305 as a representative value and a control unit 403 that is capable of receiving a discharge instruction from the higher second-ranking controller and giving the discharge instruction to the cell balance unit.

When the communication and control unit 403 is connected to the higher-ranking controller, the communication and control unit 403 is connected by a photo coupler, a capacitor or an isolated communication unit such as wireless communication. Further, a connection method such as a daisy chain connection, a bus connection or a star connection may be applied for connection of a communication wiring 404.

The controllers 302 to 304 respectively include the power supply circuit 401, the cell voltage detection circuit 402, the cell balance unit 203, and the communication and control unit 403, in a similar way to the controller 301.

The second-ranking controller 305 includes an external power supply circuit 405 that is supplied with electric power from a power source other than the battery cell, and a communication unit configured to obtain a representative value of voltages from the first-ranking controllers 301 and 302 and transmitting a minimum value or an average value thereof to the higher third-ranking controller 307 as the representative value and a control unit 406 that is capable of receiving a discharge instruction from the higher third-ranking controller 307 and giving the discharge instruction to the lower first-ranking controllers.

The controller 306 includes the power supply circuit 405 and the communication and control unit 406, in a similar way to the controller 305. The second-ranking controllers and the third-ranking controller are connected to each other by a communication wiring 407 such as a daisy chain connection or a bus connection.

The third-ranking controller 307 includes an external power supply circuit 408 that is supplied with electric power from a power source other than the battery cell, and a communication unit that obtains a representative value of voltages from the second-ranking controllers 305 and 306 and transmits a minimum value or an average value thereof to the monitor and control device 308 such as a personal computer as the representative value and a control unit 409 that is capable of receiving a discharge instruction from the monitor and control device 308 and giving the discharge instruction to the lower second-ranking controllers.

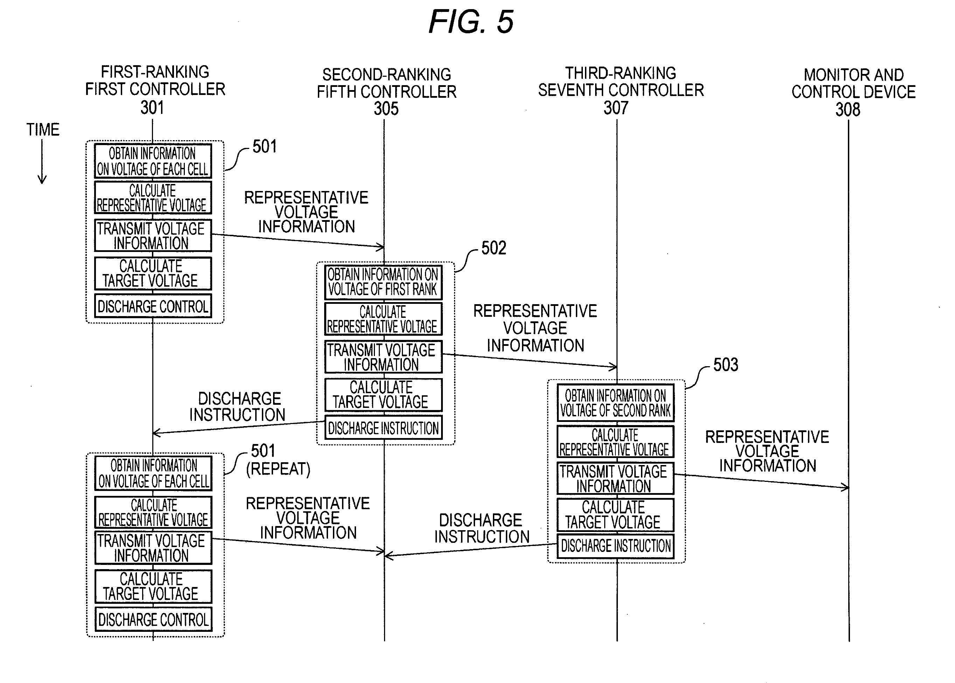

Fig. 5 is a balance control flow in a hierarchical battery system that includes three ranks.

The first-ranking controller 301 obtains voltage information about the battery cells 101 that are monitored by the first-ranking controller 301 by the cell voltage detection circuit 402, and transmits a minimum value or an average value of the cell voltages to the higher second-ranking controller as representative voltage information. The first-ranking controller 301 determines a cell to be discharged from the discharge instruction received from the second-ranking controller 305 and the cell voltage information measured by the first-ranking controller 301, and performs a discharge control by the cell balance unit 203. The first-ranking controller 301 regularly performs the series of balance controls 501.

The second-ranking controller 305 obtains representative voltage information from the respective first-ranking controllers 301 and 302 that are managed by the second-ranking controller 305, and transmits a minimum value or an average value of the representative voltages obtained from the first-ranking controllers to the higher third-ranking controller 307 as representative voltage information of the controller 305. The second-ranking controller 305 determines a controller to be given a discharge instruction from the discharge instruction received from the third-ranking controller 307 and the first-ranking representative voltage information obtained by the second-ranking controller 305, and transmits the discharge instruction to the first-ranking controller. The second-ranking controller 305 regularly performs the series of balance controls 502.

The third-ranking controller 307 obtains representative voltage information from the respective second-ranking controllers 305 and 306 that are managed by the third-ranking controller 307, and transmits a minimum value or an average value of the representative voltages obtained from the second-ranking controllers to the higher-ranking monitor and control device 308 as representative voltage information of the controller 307. The third-ranking controller 307 determines a controller to be given a discharge instruction from the discharge instruction received from the monitor and control device 308 and the second-ranking representative voltage information obtained by the third-ranking controller 307, and transmits the discharge instruction to the second-ranking controller. The third-ranking controller 307 regularly performs the series of balance controls 503.

By regularly performing the balance control at each rank, it is possible to equalize the entire cell voltages of the battery system. Further, with such a configuration in which only the first-ranking controllers 301 to 304 have the cell balance unit 203, it is not necessary to provide a discharge circuit for each rank, and it is thus possible to reduce the size of the circuit of the higher-ranking controller.

Example 2

A balance control method that is applicable to the configuration of Example 1 will be described.

In general, in a battery system, it is necessary to inform the degree of a current charging rate to a user. Even in a case where variation is present in a charged state of a battery cell, it is important to inform a current average charging rate of the battery system in view of a residual charge capacity and a residual discharge capacity. Since the average charging rate of the battery system may be calculated from an average voltage of the entire cells, a controller of a hierarchical control battery system transmits an average voltage of a cell group managed by each controller to a higher-ranking controller.

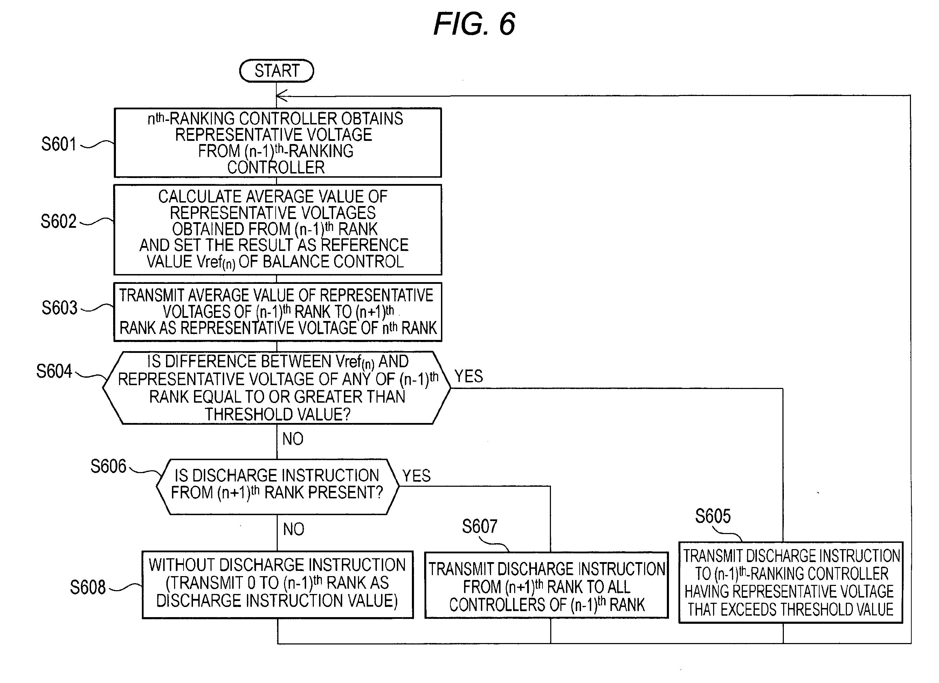

In Example 2, a balance control in a case where an average voltage of cells is transmitted to a higher rank, and a discharge instruction measuring method will be described. Fig. 6 is a flowchart of a balance control of Example 2.

When an $n^{th}$-ranking controller manages m pieces of $(n-1)^{th}$-ranking controllers, the $n^{th}$-ranking controller obtains m pieces of representative voltage information ($V_{(n-1, 1)}$, $V_{(n-1, 2)}$, ..., $V_{(n-1, m)}$) about the $(n-1)^{th}$ rank (S601). In a case where the controller is at the first rank (n=1), the voltage obtained from the $(n-1)^{th}$ rank means a cell voltage.

Here, an average value of the m pieces of representative voltage information collected from the $(n-1)^{th}$ rank is set as an $n^{th}$-ranking determination reference $Vref_{(n)}$ for realization of the balance control (S602), and the average value of the representative voltage information is transmitted to a higher $(n+1)^{th}$-ranking controller as an $n^{th}$-ranking representative voltage value. Here, the reference value $Vref_{(n)}$ is calculated according to the following expression (1).

[Expression 1]

$$Vref_{(n)}=Average(V_{(n-1, 1)}, V_{(n-1, 2)}, ..., V_{(n-1, m)}) \qquad (1)$$

Here, in a case where the representative voltage of an $m^{th}$ controller of the $(n-1)^{th}$ rank is higher than the balance control reference value $Vref_{(n)}$ by a threshold value (Vth) or greater, a difference $\Delta V_{(n-1, m)}$ with $Vref_{(n)}$ is given to the $m^{th}$ controller as a balance control instruction (S604 and S605). The threshold value voltage Vth may be set in advance. Here, a value of the discharge instruction to the $m^{th}$ controller of the $(n-1)^{th}$ rank is calculated by the following expression (2).

[Expression 2]

$$\Delta V_{(n-1, m)}=V_{(n-1, m)}-Vref_{(n)} (when\ V_{(n-1, m)}-Vref_{(n)}\leq Vth,\ \Delta V_{(n-1, m)}=0) (2)$$

As the discharge instruction is given as the difference, even though $V_{(n-1, m)}$ is changed by an electric charging and discharging operation during the balance control, it is possible to reliably make a balance by discharging the difference. However, the $n^{th}$-ranking controller similarly receives a discharge instruction from the higher $(n+1)^{th}$-ranking controller. In a case where a discharge instruction $\Delta V_{(n, m)}$ from the higher $(n+1)^{th}$-ranking controller with respect to the $n^{th}$-ranking controller is present and the discharge instruction $\Delta V_{(n-1, m)}$ with respect to the lower $(n-1)^{th}$-ranking controller is 0, the discharge instruction from the higher $(n+1)^{th}$-ranking controller is transmitted to all the lower $(n-1)^{th}$-ranking controllers (S607). Here, in a case where the discharge instruction $\Delta V_{(n-1, m)}$ is given to the lower $(n-1)^{th}$-ranking controller from the $n^{th}$-ranking controller, the discharge instruction $\Delta V_{(n-1, m)}$ to the lower $(n-1)^{th}$-ranking controller is preferentially handled (S605). In a case where the discharge instruction from the higher $(n+1)^{th}$-ranking controller is not present and the discharge instruction to the lower $(n-1)^{th}$-ranking controller is not present, the absence of the discharge instruction ($\Delta V_{(n-1, m)}=0$) is transmitted (S608). By regularly repeating the series of balance controls, it is possible to equalize the entire cell voltages of the system.

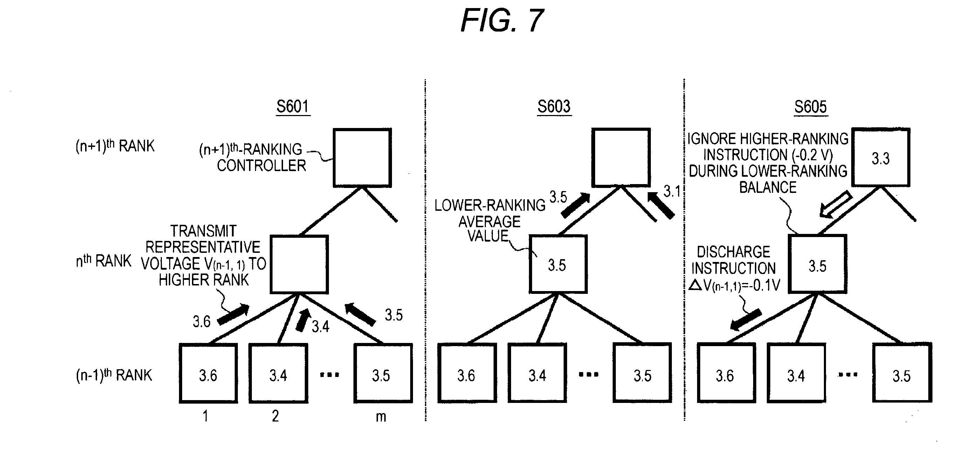

The balance control operation of Example 2 will be described referring to Fig. 7. Fig. 7 is a diagram illustrating a connection relationship between controllers of three ranks around the $n^{th}$ rank. First, it is assumed that representative voltages of the first, second and $m^{th}$ controllers of the $(n-1)^{th}$ rank are respectively 3.6 V, 3.4 V and 3.5 V.

The $n^{th}$-ranking controller first obtains representative voltage information from all the $(n-1)^{th}$-ranking controllers (S601). The $n^{th}$-ranking controller calculates an average value (3.5 V) of the representative voltages obtained from the $(n-1)^{th}$ rank to set the average value to the representative voltage of the $n^{th}$ rank, and transmits the result to the higher $(n+1)^{th}$ rank (S603).

Here, in a case where the threshold value voltage Vth of the $n^{th}$-ranking controller is set to be smaller than 0.1 V, the $n^{th}$-ranking controller transmits a discharge instruction $\Delta V_{(n-1, 1)}=-0.1$ V to the first controller of the $(n-1)^{th}$ rank. Here, in a case where a discharge instruction $\Delta V_{(n, 1)}=-0.2$ V is transmitted from the higher $(n+1)^{th}$-ranking controller, the $n^{th}$-ranking controller does not transmit the discharge instruction from the $(n+1)^{th}$ rank to the lower rank until the discharge instructions of all the $(n-1)^{th}$-ranking controllers reach 0. By preferentially handling the instruction to the lower $(n-1)^{th}$ rank compared with the instruction from the higher $(n+1)^{th}$ rank, it is possible to prevent execution of the higher-ranking discharge instruction in a state where variation of the cell voltages is present, and to efficiently equalize the cell voltages.

By repeating the balance control shown in Example 2, it is possible to prevent variation of the cell voltages in the battery system.

Example 3

A balance control method that is applicable to the configuration of Example 1 will be described.

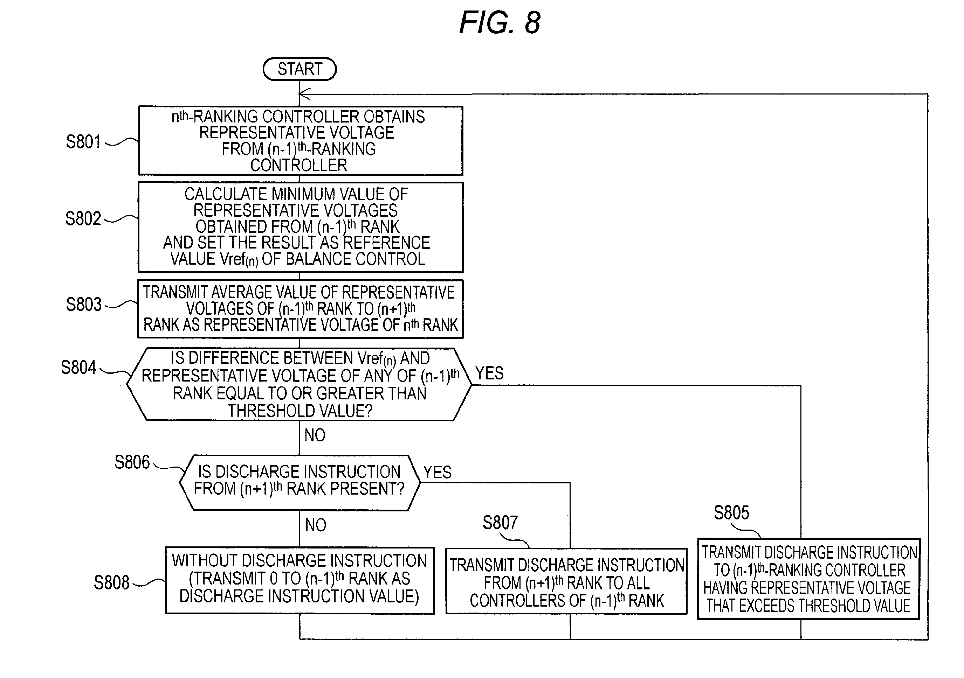

In Example 3, a control method in which a minimum voltage value of representative voltage values collected from a lower rank at the same time when an average voltage of cells is transmitted to a higher rank is used as a reference voltage of a balance control, and a calculation method of a discharge instruction will be described. Fig. 8 is a flowchart of a balance control of Example 3.

When the $n^{th}$-ranking controller manages m pieces of $(n-1)^{th}$-ranking controllers, the $n^{th}$-ranking controller obtains m pieces of representative voltage information $((V_{(n-1, 1)}, V_{(n-1, 2)}, ... V_{(n-1, m)})$ about the $(n-1)^{th}$ rank (S801). In a case where a controller belongs to the first rank (n=1), a voltage obtained from the $(n-1)^{th}$ rank means a cell voltage.

Here, a minimum value of the m pieces of representative voltage information collected from the $(n-1)^{th}$ rank is set as an $n^{th}$-ranking determination reference $Vref_{(n)}$ for realization of the balance control (S802), and the average value of the representative voltage information is transmitted to the higher $(n+1)^{th}$-ranking controller as an $n^{th}$-ranking representative voltage value. Here, the reference value $Vref_{(n)}$ is calculated according to the following expression (3).
[Expression 3]

$$Vref_{(n)}=Minimum(V_{(n-1, 1)}, V_{(n-1, 2)}, ..., V_{(n-1, m)}) \qquad (3)$$

Here, if the representative voltage of an $m^{th}$ controller of the $(n-1)^{th}$ rank is higher than the balance control reference value $Vref_{(n)}$ by a threshold value (Vth) or greater, a difference $\Delta V_{(n-1, m)}$ with $Vref_{(n)}$ is given to the $m^{th}$ controller as a balance control instruction (S604 and S605). The threshold value voltage Vth may be set in advance. Here, a value of the discharge instruction to the $m^{th}$ controller of the $(n-1)^{th}$ rank is calculated by the following expression (4).
[Expression 4]

$$\Delta V_{(n-1, m)}=V_{(n-1, m)}-Vref_{(n)} \text{ (when } V_{(n-1, m)}-Vref_{(n)} \leq Vth, \Delta V_{(n-1, m)}=0) \text{ (4)}$$

In a case where a discharge instruction $\Delta V_{(n, m)}$ from the higher $(n+1)^{th}$-ranking controller with respect to the $n^{th}$-ranking controller is present and the discharge instruction $\Delta V_{(n-1, m)}$ with respect to the lower $(n-1)^{th}$-ranking controller is 0, the discharge instruction from the higher $(n+1)^{th}$-ranking controller is transmitted to all the lower $(n-1)^{th}$-ranking controllers (S807). Here, in a case where the discharge instruction $\Delta V_{(n-1, m)}$ is given to the lower $(n-1)^{th}$-ranking controller from the $n^{th}$-ranking controller, the discharge instruction $\Delta V_{(n-1, m)}$ to the lower $(n-1)^{th}$-ranking controller is preferentially handled (S805). In a case where the discharge instruction from the higher $(n+1)^{th}$-ranking controller is not present and the discharge instruction to the lower $(n-1)^{th}$-ranking controller is not present, the absence of the discharge instruction $(\Delta V_{(n-1, m)}=0)$ is transmitted (S808). By regularly repeating the series of balance controls, it is possible to equalize the entire cell voltages of the system.

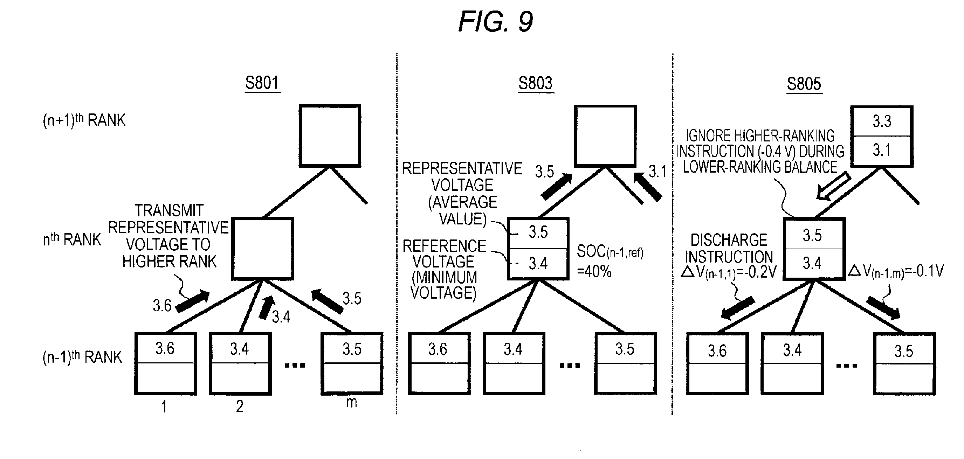

The balance control operation of Example 3 will be described referring to Fig. 9. Fig. 9 is a diagram illustrating a connection relationship between controllers of three ranks around the $n^{th}$ rank. First, it is assumed that representative voltages of the first, second and m$^{th}$ controllers of the (n-1)$^{th}$ rank are respectively 3.6 V, 3.4 V and 3.5 V. The n$^{th}$-ranking controller first obtains representative voltage information from all the (n-1)$^{th}$-ranking controllers (S801). The n$^{th}$-ranking controller calculates a minimum value (3.4 V) of the representative voltages obtained from the (n-1)$^{th}$ rank to set the result as the balance control reference value Vref$_{(n)}$ of the n$^{th}$ rank, and transmits an average value of the representative voltages obtained from the (n-1)$^{th}$ rank to the higher (n+1)$^{th}$-ranking controller as the representative voltage of the n$^{th}$ rank (S803).

Here, in a case where the threshold value voltage Vth of the n$^{th}$-ranking controller is set to be smaller than 0.1 V, the n$^{th}$-ranking controller transmits a discharge instruction $\Delta V_{(n-1, 1)}$=-0.1 V to the first controller of the (n-1)$^{th}$ rank. Here, in a case where a discharge instruction $\Delta V_{(n, 1)}$=-0.4 V is transmitted from the higher (n+1)$^{th}$-ranking controller, the n$^{th}$-ranking controller does not transmit the discharge instruction from the (n+1)$^{th}$ rank to the lower rank until the discharge instructions of all the (n-1)$^{th}$-ranking controllers reach 0.

By repeating the balance control shown in Example 3, it is possible to prevent variation of the cell voltages in the battery system.

Example 4

A balance control method that is applicable to the configuration of Example 1 will be described.

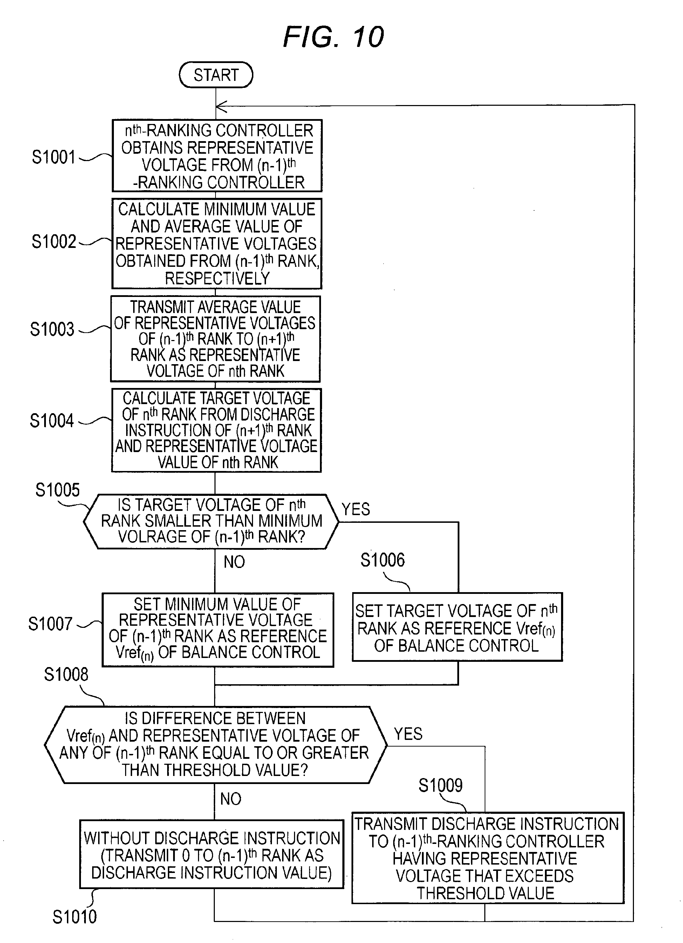

In Example 4, a control method in which a minimum voltage value of representative voltage values collected from a lower rank at the same time when an average voltage of cells is transmitted to a higher rank is used as a reference voltage of a balance control and the balance control reference voltage is updated by a discharge instruction from a higher rank, and a calculation method of the discharge instruction will be described. Fig. 10 is a flowchart of a balance control of Example 4.

When the n$^{th}$-ranking controller manages m pieces of (n-1)$^{th}$-ranking controllers, an x$^{th}$ controller of the n$^{th}$ rank obtains m pieces of representative voltage information ($V_{(n-1, 1)}$, $V_{(n-1, 2)}$, ..., $V_{(n-1, m)}$) about the (n-1)$^{th}$ rank (S1001).

In a case where a controller belongs to the first rank (n=1), a voltage obtained from the (n-1)$^{th}$ rank means a cell voltage. Here, the x$^{th}$ controller of the n$^{th}$ rank respectively calculates an average value (1) of the m pieces of representative voltage information collected from the (n-1)$^{th}$ rank and a minimum value (2) thereof (S1002), and transmits the average value (1) to the higher (n+1)$^{th}$-ranking controller as an n$^{th}$-ranking representative voltage value (S1003).

Here, the x$^{th}$ controller of the n$^{th}$ rank receives a discharge instruction $\Delta V_{(n, x)}$ from the higher (n+1)$^{th}$ rank, and may calculate "target voltage ($V_{TGT}$) of the higher (n+1)$^{th}$-ranking controller" (3) according to (3)=(1)-$\Delta V_{(n, x)}$. That is, $V_{TGT}$ may be calculated by the following expression (5).

[Expression 5]

$$V_{TGT}=Average(V_{(n-1, 1)}, V_{(n-1, 2)}, ..., V_{(n-1, m)})-\Delta V_{(n, m)} \quad (5)$$

Here, the minimum value (2) of the (n-1)$^{th}$ rank is compared with the target voltage $V_{TGT}$ (3), and a smaller value is set as the target value Vref$_{(n)}$ of the balance control (S1006). In a case where the representative voltage of an m$^{th}$ controller of the (n-1)$^{th}$ rank is higher than the balance control reference value Vref$_{(n)}$ by a threshold value (Vth) or greater, a difference $\Delta V_{(n-1, m)}$ with Vref$_{(n)}$ is given to the m$^{th}$ controller as a balance control instruction (S1008, S1009 and S1010). The threshold value voltage Vth may be set in advance. Here, a value of the discharge instruction to the m$^{th}$ controller of the (n-1)$^{th}$ rank is calculated by the following expression (6).

[Expression 6]

$$\Delta V_{(n-1, m)}=V_{(n-1, m)}-Vref_{(n)} \text{ (when } V_{(n-1, m)}-Vref_{(n)}\leq Vth, \Delta V_{(n-1, m)}=0) \quad (6)$$

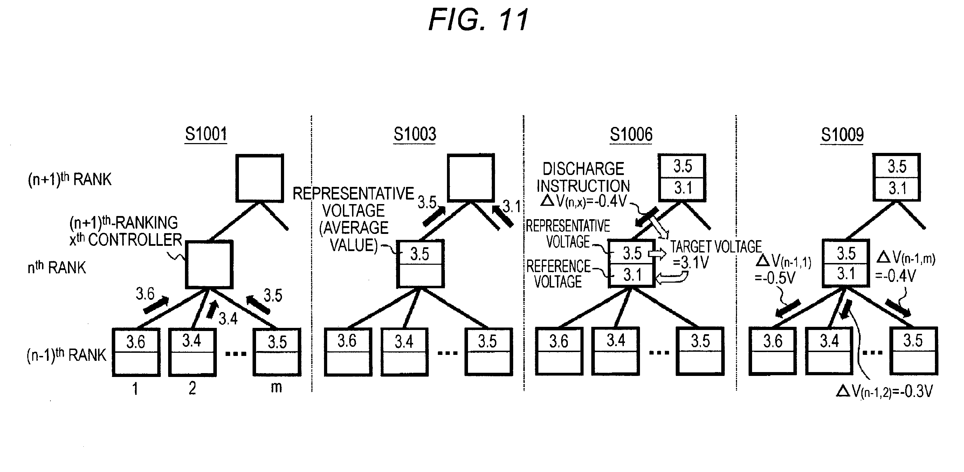

The balance control operation of Example 4 will be described referring to Fig. 11. Fig. 11 is a diagram illustrating a connection relationship between controllers of three ranks around the n$^{th}$ rank. First, it is assumed that representative voltages of the first, second and m$^{th}$ controllers of the (n-1)$^{th}$ rank are respectively 3.6 V, 3.4 V and 3.5 V.

The n$^{th}$-ranking controller first obtains representative voltage information from all the (n-1)$^{th}$-ranking controllers (S1001). The n$^{th}$-ranking controller calculates an average value (3.5 V) of the representative voltages obtained from the (n-1)$^{th}$ rank to set the average value as the representative voltage of the n$^{th}$ rank, and transmits the result to the higher (n+1)$^{th}$-ranking controller (S1003).

Here, when the n$^{th}$-ranking controller receives a discharge instruction (-0.4 V) from the higher (n+1)$^{th}$-ranking controller, the n$^{th}$-ranking controller calculates a target voltage of 3.1 V by subtracting 0.4 V from 3.5 V. This target voltage is compared with a representative voltage of each controller of the (n-1)th rank, and a smaller value is set as the balance control reference voltage of the nth rank (S1006). In a case where the representative voltage of each controller of the (n-1)th rank is higher than the balance control reference voltage by a threshold value or greater, the difference $\Delta V_{(n-1, m)}$ is transmitted to the (n-1)th-ranking controller as a discharge instruction (S1009).

By repeating the balance control shown in Example 4, it is possible to prevent variation of the cell voltages in the battery system.

Example 5

A balance control method that is applicable to the configuration of Example 1 will be described.

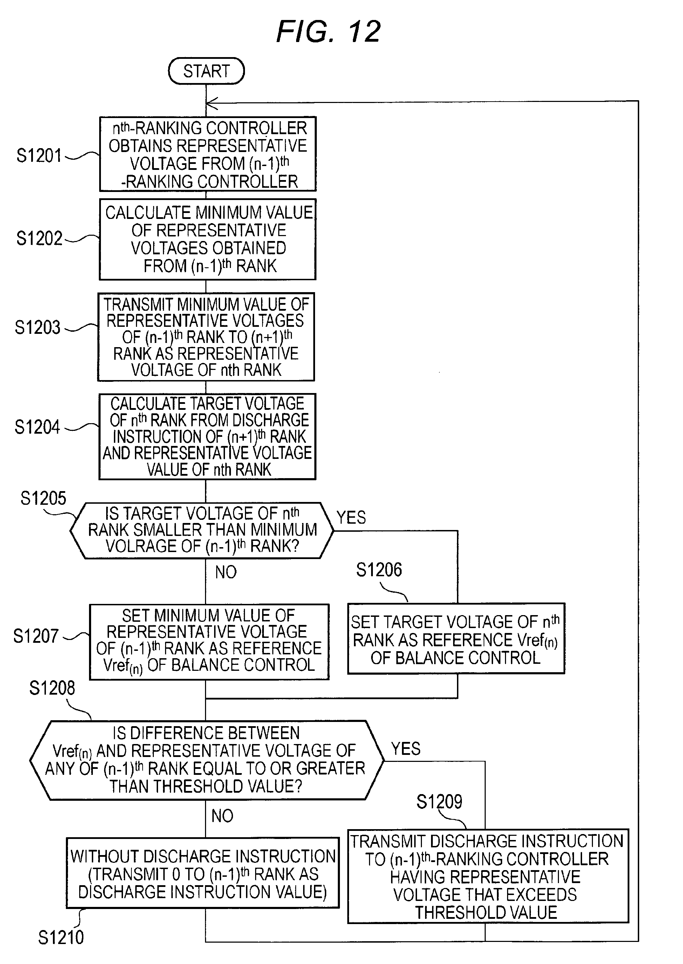

In Example 5, a balance control method in a case where a minimum voltage is transmitted to a higher rank as a representative voltage and a calculation method of a discharge instruction will be described. Fig. 12 is a flowchart of a balance control of Example 5.

When the nth-ranking controller manages m pieces of (n-1)th-ranking controllers, an xth controller of the nth rank obtains m pieces of representative voltage information $((V_{(n-1, 1)}, V_{(n-1, 2)}, ...., V_{(n-1, m)})$ about the (n-1)th rank (S1201). In a case where a controller belongs to the first rank (n=1), a voltage obtained from the (n-1)th rank means a cell voltage. Here, the xth controller of the nth rank respectively calculates a minimum value of the m pieces of representative voltage information collected from the (n-1)th rank (S1202), and transmits the minimum value to the higher (n+1)th-ranking controller as an nth-ranking representative voltage value (S1203). Here, the xth controller of the nth rank receives a discharge instruction $\Delta V_{(n, x)}$ from the higher (n+1)th rank, and may calculate a target voltage $(V_{TGT})$ of the higher (n+1)th-ranking controller by the following expression (7).

[Expression 7]

$$V_{TGT}=\mathrm{Minimum}(V_{(n-1, 1)}, V_{(n-1, 2)}, ..., V_{(n-1, m)})\text{-}\Delta V_{(n, m)} \qquad (7)$$

Here, the minimum value of the (n-1)th rank is compared with the target voltage $V_{TGT}$, and a smaller value is set as the target value $Vref_{(n)}$ of the balance control (S1206). If the representative voltage of an mth controller of the (n-1)th rank is higher than the balance control reference value $Vref_{(n)}$ by a threshold value (Vth) or greater, a difference $\Delta V_{(n-1, m)}$ with $Vref_{(n)}$ is given to the mth controller as a balance control instruction (S1208, S1209 and S1210).

The threshold value voltage Vth may be set in advance. Here, a value of the discharge instruction to the mth controller of the (n-1)th rank is calculated by the following expression (8).

[Expression 8]

$$V_{(n-1, m)}=V_{(n-1, m)}\text{-}Vref_{(n)} \text{ (when } V_{(n-1, m)}\text{-}Vref_{(n)}\leq Vth, \Delta V_{(n-1, m)}=0) \quad (8)$$

The balance control shown in Example 5 will be described referring to Fig. 12. Fig. 12 is a diagram illustrating a connection relationship between controllers of three ranks around the nth rank. First, it is assumed that representative voltages of the first, second and mth controllers of the (n-1)th rank are respectively 3.6 V, 3.4 V and 3.5 V.

The nth-ranking controller first obtains representative voltage information from all the (n-1)th-ranking controllers (S1201). Then nth-ranking controller calculates a minimum value (3.4 V) of the representative voltages obtained from the (n-1)th rank to set the minimum value as the representative voltage of the nth rank, and transmits the result to the higher (n+1)th-ranking controller (S1203). Here, when the nth-ranking controller receives a discharge instruction (-0.3 V) from the higher (n+1)th-ranking controller, the nth-ranking controller calculates a target voltage of 3.1 V by subtracting 0.3 V from 3.4 V. This target voltage is compared with a representative voltage of each controller of the (n-1)th-rank, and a smaller value is set as the balance control reference voltage of the nth rank (S1206).

In a case where the representative voltage of each controller of the (n-1)th rank is higher than the balance control reference voltage by a threshold value or greater, the difference $\Delta V_{(n-1, m)}$ is transmitted to the (n-1)th-ranking controller as a discharge instruction (S1209). By repeating the balance control shown in Example 5, it is possible to prevent variation of the cell voltages in the battery system.

Example 6

In the methods of Examples 1 to 5, it is possible to perform the same balance control even though the cell voltage information is replaced by charging rate information about the battery cells.

**Claims**

1. A battery system control method in which
   a plurality of battery cells is connected to each other in series, in parallel or in series-parallel to form an assembled battery,
   the plurality of assembled batteries is connected to each other in series, in parallel or in series-parallel to form first to fourth assembled batteries,
   first to fourth controllers are present in a first rank,
   a second rank that includes fifth and sixth controllers is provided as a higher rank of the first rank,
   a third rank that includes a seventh controller is provided as a higher rank of the second rank,
   the first to fourth assembled batteries respectively match with the first to fourth controllers one to one, and
   first to fourth cell voltage measuring units configured to individually detect an inter-terminal voltage of each battery cell that belongs to the first to fourth assembled batteries, a cell balance unit configured to individually discharge the battery cells that respectively belong to the first to fourth assembled batteries, and first to fourth communication and control units are respectively prepared in the first to fourth controllers,
   the method comprising:

   (a) causing each of the first to fourth communication and control units that respectively belong to the first to fourth controllers to set, using each inter-terminal voltage value of the battery cells that are respectively detected using the plurality of cell voltage measuring units that belong to the controller, an average value of the values as first to fourth representative values, and to set any predetermined value among the average value and a minimum value as first to fourth reference values;
   (b) causing each of the first to fourth communication and control units that respectively belong to the first to fourth controllers to transmit the first and second representative values to fifth communication and control unit provided in the fifth controller, and to transmit the third and fourth representative values to sixth communication and control unit provided in the sixth controller,
   causing the fifth communication and control unit to set an average value of the first and second representative values as a fifth representative value and to set any predetermined value among the average value and a minimum value of the first and second representative values as a fifth reference value, and causing the sixth communication and control unit to set an average value of the third and fourth representative values as a sixth representative value and to calculate any predetermined value among the average value and a minimum value of the third and fourth representative values to set the result as a sixth reference value,
   causing the fifth communication and control unit and the sixth communication and control unit to respectively transmit the fifth representative value and the sixth representative value to a seventh communication and control unit provided in the seventh controller, and
   causing the seventh communication and control unit to set an average value of the fifth and sixth representative values as a seventh representative value and to calculate any predetermined value among the average value and a minimum value of the fifth and sixth representative values to set the result as a seventh reference value;
   (c) causing the seventh communication and control unit to give, in a case where the fifth representative value or the sixth representative value is higher than the seventh reference value by a predetermined threshold value or greater in the third rank, a discharge instruction to the fifth or sixth communication and control unit, and to give, in a case where the fifth and sixth representative values exceed a seventh target value obtained by adding the threshold value in the third rank to the seventh reference value, a seventh discharge instruction for performing discharging so that the representative value is close to the seventh target value to the corresponding controller;
   (d)

      (d1) causing the fifth communication and control unit to give, in a case where the first representative value or the second representative value is higher than the fifth reference value by a threshold value or greater in the second rank, a fifth discharge instruction to the first or second communication and control unit for performing discharging so that the representative value is close to the fifth target value to the first or second controller in a case where the first and second representative values exceed a fifth target value obtained by adding the threshold value in the second rank to the fifth reference value, and
      causing the fifth communication and control unit to transmit the seventh discharge instruction received by the fifth controller to the first or second controller as the fifth discharge instruction in a case where the first and second representative values do not exceed the fifth target value obtained by adding the threshold value in the second rank to the fifth reference value, and
      (d2) causing the sixth communication and control unit to give, in a case where the third representative value or the fourth representative value is higher than the sixth reference value by a predetermined threshold value or greater in the second rank, a discharge instruction to the third or fourth communication and control unit, and to give, in a case where the third and fourth representative values exceed a sixth target value obtained by adding the threshold value in the second rank to the sixth reference value, a sixth discharge instruction for performing discharging so that the representative value is close to the sixth target value to the third or fourth controller, and

causing the sixth communication and control unit to transmit, in a case where the third and fourth representative values do not exceed the sixth target value obtained by adding the threshold value in the second rank to the sixth reference value, the seventh discharge instruction received by the sixth controller to the third or fourth controller as the sixth discharge instruction;

(e)

(e1) causing the first and second communication and control units to give, in a case where each inter-terminal voltage value of the battery cells that respectively belong to the first and second assembled batteries is higher than the first and second reference values by a predetermined threshold value or greater in the first rank, first and second discharge instructions for performing discharging so that the inter-terminal voltage value is close to first and second target values obtained by adding the threshold value in the first rank to the corresponding first and second reference values by individually discharging the battery cells for a predetermined time, to the cell balance unit connected to the battery cells, and

causing the first and second communication and control units to give, in a case where each inter-terminal voltage value of the battery cells that respectively belong to the first and second assembled batteries is not higher than the first and second reference values by the predetermined threshold value or greater in the first rank and in a case where the fifth discharge instruction is received, the first and second discharge instructions for performing discharging so that the inter-terminal voltage value is close to first and second target values obtained by adding the threshold value in the first rank to the corresponding fifth reference value by discharging all the battery cells for a predetermined time designated by the fifth discharge instruction, to the cell balance unit connected to the battery cells, and

(e2) causing the third and fourth communication and control units to give, in a case where each inter-terminal voltage value of the battery cells that respectively belong to the third and fourth assembled batteries is higher than the third and fourth reference values by a predetermined threshold value or greater in the first rank, third and fourth discharge instructions for performing discharging so that the inter-terminal voltage value is close to third and fourth target values obtained by adding the threshold value in the first rank to the corresponding third and fourth reference values by individually discharging the battery cells for a predetermined time, to the cell balance unit connected to the battery cells, and

causing the third and fourth communication and control units to give, in a case where each inter-terminal voltage value of the battery cells that respectively belong to the third and fourth assembled batteries is not higher than the third and fourth reference values by the predetermined threshold value or greater in the first rank and in a case where the sixth discharge instruction is received, the third and fourth discharge instructions for performing discharging so that the inter-terminal voltage value is close to third and fourth target values obtained by adding the threshold value in the first rank to the corresponding sixth reference value by discharging all the battery cells for a predetermined time designated by the sixth discharge instruction, to the cell balance unit connected to the battery cells, and returning to (a); and

(h) controlling the inter-terminal voltages so that variation of the inter-terminal voltages between the plurality of battery cells is reduced by repeating the processes of (a) to (e).

2. A battery system control method in which
a plurality of battery cells is connected to each other in series, in parallel or in series-parallel to form an assembled battery,
the plurality of assembled batteries is connected to each other in series, in parallel or in series-parallel to form first to fourth assembled batteries,
first to fourth controllers are present in a first rank,
a second rank that includes fifth and sixth controllers is provided as a higher rank of the first rank,
a third rank that includes a seventh controller is provided as a higher rank of the second rank,
the first to fourth assembled batteries respectively match with the first to fourth controllers one to one, and
first to fourth cell voltage measuring units configured to individually detect an inter-terminal voltage of each battery cell that belongs to the first to fourth assembled batteries, a cell balance unit configured to individually discharge the battery cells that respectively belong to the first to fourth assembled batteries, and first to fourth communication and control units are respectively prepared in the first to fourth controllers,
the method comprising:

(a) causing each of the first to fourth communication and control units that respectively belong to the first to fourth controllers to set, using each inter-terminal voltage value of the battery cells that are respectively detected using the plurality of cell voltage measuring units that belong to the controller, any predetermined value among an average value and a minimum value of the values as first to fourth representative values, and to set the minimum value as first to fourth reference values;

(b) causing each of the first to fourth communication and control units that respectively belong to the first to fourth controllers to transmit the first and second representative values to a fifth communication and control unit provided in the fifth controller, and to transmit the third and fourth representative values to a sixth communication and control unit provided in the sixth controller,
causing the fifth communication and control unit to set any predetermined value among an average value and a minimum value of the first and second representative values as a fifth representative value and to set the minimum value of the first and second representative values as a fifth reference value, and causing the sixth communication and control unit to set any predetermined value among an average value and a minimum value of the third and fourth representative values as a sixth representative value and to set the minimum value of the third and fourth representative values as a sixth reference value,
causing the fifth communication and control unit and the sixth communication and control unit to respectively transmit the fifth representative value and the sixth representative value to a seventh communication and control unit provided in the seventh controller, and
causing the seventh communication and control unit to set any predetermined value among an average value and a minimum value of the fifth and sixth representative values as a seventh representative value and to set the minimum value of the fifth and sixth representative values as a seventh reference value;

(c) causing the seventh communication and control unit to give, in a case where the fifth representative value or the sixth representative value is higher than the seventh reference value by a predetermined threshold value or greater in the third rank, a discharge instruction to the fifth or sixth communication and control unit, and to give, in a case where the fifth and sixth representative values exceed a seventh target value obtained by adding the threshold value in the third rank to the seventh reference value, a seventh discharge instruction for performing discharging so that the representative value is close to the seventh target value to the corresponding controller;

(d)

(d1) causing the fifth controller to calculate a fifth target value by subtracting a value of the seventh discharge instruction from the fifth representative value, and to set the fifth target value as a new fifth reference value in a case where the fifth target value is smaller than the fifth reference value, and
(d2) causing the sixth controller to calculate a sixth target value by subtracting a value of the seventh discharge instruction from the sixth representative value, and to set the sixth target value as a new sixth reference value in a case where the sixth target value is smaller than the sixth reference value;

(e)

(e1) causing the fifth communication and control unit to give, in a case where the first representative value or the second representative value is higher than the fifth reference value by a predetermined threshold value or greater in the second rank, a discharge instruction to the first or second communication and control unit, and to give, in a case where the first and second representative values exceed a fifth target value obtained by adding the threshold value in the second rank to the fifth reference value, a fifth discharge instruction for performing discharging so that the representative value is close to the fifth target value to the first or second controller, and
(e2) causing the sixth communication and control unit to give, in a case where the third representative value or the fourth representative value is higher than the sixth reference value by a predetermined threshold value or greater in the second rank, a discharge instruction to the third or fourth communication and control unit, and to give, in a case where the third and fourth representative values exceed a sixth target value obtained by adding the threshold value in the second rank to the sixth reference value, a sixth discharge instruction for performing discharging so that the representative value is close to the sixth target value to the third or fourth controller;

(f)

(f1) causing the first and second controllers to calculate first and second target values by respectively subtracting a value of the fifth discharge instruction from the first and second representative values, and to respectively set the first and second target values as new first and second reference values in a case where the first and second target values are smaller than the first and second reference values, and

(f2) causing the third and fourth controllers to calculate third and fourth target values by respectively subtracting a value of the sixth discharge instruction from the third and fourth representative values, and to respectively set the third and fourth target values as new third and fourth reference values in a case where the third and fourth target values are smaller than the third and fourth reference values;

(g)

(g1) causing the first and second communication and control unit to give, in a case where each inter-terminal voltage value of the battery cells that respectively belong to the first and second assembled batteries is higher than the first and second reference values by a predetermined threshold value or greater in the first rank, first and second discharge instructions for performing discharging so that the inter-terminal voltage value is close to first and second target values obtained by adding the threshold value in the first rank to the corresponding first and second reference values by individually discharging the battery cells for a predetermined time, to the cell balance unit connected to the battery cells, and

(g2) causing the third and fourth communication and control unit to give, in a case where each inter-terminal voltage value of the battery cells that respectively belong to the third and fourth assembled batteries is higher than the third and fourth reference values by a predetermined threshold value or greater in the first rank, third and fourth discharge instructions for performing discharging so that the inter-terminal voltage value is close to third and fourth target values obtained by adding the threshold value in the first rank to the corresponding third and fourth reference values by individually discharging the battery cells for a predetermined time, to the cell balance unit connected to the battery cells, and returning to (a); and

(h) controlling the inter-terminal voltages so that variation of the inter-terminal voltages between the plurality of battery cells is reduced by repeating the processes of (a) to (g).

3. A battery system control method in which
a plurality of battery cells is connected to each other in series, in parallel or in series-parallel to form an assembled battery,
the plurality of assembled batteries is connected to each other in series, in parallel or in series-parallel to form first to fourth assembled batteries,
first to fourth controllers are present in a first rank,
a second rank that includes fifth and sixth controllers is provided as a higher rank of the first rank,
a third rank that includes a seventh controller is provided as a higher rank of the second rank,
the first to fourth assembled batteries respectively match with the first to fourth controllers one to one, and
first to fourth cell voltage measuring units configured to individually detect an inter-terminal voltage of each battery cell that belongs to the first to fourth assembled batteries, a cell balance unit configured to individually discharge the battery cells that respectively belong to the first to fourth assembled batteries, and first to fourth communication and control units are respectively prepared in the first to fourth controllers,
the method comprising:

(a) causing each of the first to fourth communication and control units that respectively belong to the first to fourth controllers to respectively calculate, using each inter-terminal voltage value of the battery cells that are respectively detected using the plurality of cell voltage measuring units that belong to the controller, a minimum value of the values as first to fourth reference values;

(b) causing each of the first to fourth communication and control units that respectively belong to the first to fourth controllers to transmit the first and second reference values to a fifth communication and control unit provided in the fifth controller, and to transmit the third and fourth reference values to a sixth communication and control unit provided in the sixth controller,
causing the fifth communication and control unit to calculate a minimum value of the first and second reference values to set the result as a fifth reference value, and causing the sixth communication and control unit to calculate a minimum value of the third and fourth reference values to set the result as a sixth reference value,
causing the fifth communication and control unit and the sixth communication and control unit to respectively transmit the fifth reference value and the sixth reference value to a seventh communication and control unit provided in the seventh controller, and

causing the seventh communication and control unit to calculate a minimum value of the fifth and sixth reference values to set the result as a seventh reference value;

(c) transmitting the seventh reference value to the first to fourth controllers through the seventh, sixth, fifth, fourth, third, second and first communication and control units;

(d) discharging, in a case where the inter-terminal voltage of each battery cell is higher than the seventh reference value by a predetermined threshold value or greater, the battery cell so that the voltage of the battery cell is close to the seventh reference value, and returning to (a); and

(e) controlling the inter-terminal voltages so that variation of the inter-terminal voltages between the plurality of battery cells is reduced by repeating the processes of (a) to (d).

FIG. 1

*FIG. 2*

FIG. 3

## FIG. 4

EP 2 709 201 A2

# FIG. 5

FIRST-RANKING
FIRST CONTROLLER
301

SECOND-RANKING
FIFTH CONTROLLER
305

THIRD-RANKING
SEVENTH CONTROLLER
307

MONITOR AND
CONTROL DEVICE
308

TIME

501
OBTAIN INFORMATION ON VOLTAGE OF EACH CELL
CALCULATE REPRESENTATIVE VOLTAGE
TRANSMIT VOLTAGE INFORMATION
CALCULATE TARGET VOLTAGE
DISCHARGE CONTROL

REPRESENTATIVE VOLTAGE INFORMATION

502
OBTAIN INFORMATION ON VOLTAGE OF FIRST RANK
CALCULATE REPRESENTATIVE VOLTAGE
TRANSMIT VOLTAGE INFORMATION
CALCULATE TARGET VOLTAGE
DISCHARGE INSTRUCTION

REPRESENTATIVE VOLTAGE INFORMATION

503
OBTAIN INFORMATION ON VOLTAGE OF SECOND RANK
CALCULATE REPRESENTATIVE VOLTAGE
TRANSMIT VOLTAGE INFORMATION
CALCULATE TARGET VOLTAGE
DISCHARGE INSTRUCTION

REPRESENTATIVE VOLTAGE INFORMATION

DISCHARGE INSTRUCTION

501 (REPEAT)
OBTAIN INFORMATION ON VOLTAGE OF EACH CELL
CALCULATE REPRESENTATIVE VOLTAGE
TRANSMIT VOLTAGE INFORMATION
CALCULATE TARGET VOLTAGE
DISCHARGE CONTROL

REPRESENTATIVE VOLTAGE INFORMATION

DISCHARGE INSTRUCTION

EP 2 709 201 A2

## FIG. 6

START

S601 — nth-RANKING CONTROLLER OBTAINS REPRESENTATIVE VOLTAGE FROM $(n-1)^{th}$-RANKING CONTROLLER

S602 — CALCULATE AVERAGE VALUE OF REPRESENTATIVE VOLTAGES OBTAINED FROM $(n-1)^{th}$ RANK AND SET THE RESULT AS REFERENCE VALUE $Vref_{(n)}$ OF BALANCE CONTROL

S603 — TRANSMIT AVERAGE VALUE OF REPRESENTATIVE VOLTAGES OF $(n-1)^{th}$ RANK TO $(n+1)^{th}$ RANK AS REPRESENTATIVE VOLTAGE OF $n^{th}$ RANK

S604 — IS DIFFERENCE BETWEEN $Vref_{(n)}$ AND REPRESENTATIVE VOLTAGE OF ANY OF $(n-1)^{th}$ RANK EQUAL TO OR GREATER THAN THRESHOLD VALUE? — YES

NO

S606 — IS DISCHARGE INSTRUCTION FROM $(n+1)^{th}$ RANK PRESENT? — YES

NO

S608 — WITHOUT DISCHARGE INSTRUCTION (TRANSMIT 0 TO $(n-1)^{th}$ RANK AS DISCHARGE INSTRUCTION VALUE)

S607 — TRANSMIT DISCHARGE INSTRUCTION FROM $(n+1)^{th}$ RANK TO ALL CONTROLLERS OF $(n-1)^{th}$ RANK

S605 — TRANSMIT DISCHARGE INSTRUCTION TO $(n-1)^{th}$-RANKING CONTROLLER HAVING REPRESENTATIVE VOLTAGE THAT EXCEEDS THRESHOLD VALUE

# FIG. 7

EP 2 709 201 A2

## FIG. 8

START

S801 — nth-RANKING CONTROLLER OBTAINS REPRESENTATIVE VOLTAGE FROM (n-1)th-RANKING CONTROLLER

S802 — CALCULATE MINIMUM VALUE OF REPRESENTATIVE VOLTAGES OBTAINED FROM (n-1)th RANK AND SET THE RESULT AS REFERENCE VALUE $V_{ref(n)}$ OF BALANCE CONTROL

S803 — TRANSMIT AVERAGE VALUE OF REPRESENTATIVE VOLTAGES OF (n-1)th RANK TO (n+1)th RANK AS REPRESENTATIVE VOLTAGE OF nth RANK

S804 — IS DIFFERENCE BETWEEN $V_{ref(n)}$ AND REPRESENTATIVE VOLTAGE OF ANY OF (n-1)th RANK EQUAL TO OR GREATER THAN THRESHOLD VALUE? — YES

NO

S806 — IS DISCHARGE INSTRUCTION FROM (n+1)th RANK PRESENT? — YES

NO

S808 — WITHOUT DISCHARGE INSTRUCTION (TRANSMIT 0 TO (n-1)th RANK AS DISCHARGE INSTRUCTION VALUE)

S807 — TRANSMIT DISCHARGE INSTRUCTION FROM (n+1)th RANK TO ALL CONTROLLERS OF (n-1)th RANK

S805 — TRANSMIT DISCHARGE INSTRUCTION TO (n-1)th-RANKING CONTROLLER HAVING REPRESENTATIVE VOLTAGE THAT EXCEEDS THRESHOLD VALUE

# FIG. 9

EP 2 709 201 A2

**S801**

(n+1)th RANK

nth RANK — TRANSMIT REPRESENTATIVE VOLTAGE TO HIGHER RANK

3.6

3.4

3.5

(n-1)th RANK

| 3.6 | 3.4 | ... | 3.5 |

1     2     m

**S803**

REPRESENTATIVE VOLTAGE (AVERAGE VALUE) — 3.5   3.1

REFERENCE VOLTAGE (MINIMUM VOLTAGE)

| 3.5 |
| 3.4 | $SOC_{(n-1,ref)}$ =40%

| 3.6 | 3.4 | ... | 3.5 |

**S805**

| 3.3 |
| 3.1 |

IGNORE HIGHER-RANKING INSTRUCTION (-0.4 V) DURING LOWER-RANKING BALANCE

DISCHARGE INSTRUCTION $\triangle V_{(n-1,1)}$=-0.2V

| 3.5 |
| 3.4 | $\triangle V_{(n-1,m)}$=-0.1V

| 3.6 | 3.4 | ... | 3.5 |

## FIG. 10

START

S1001 — nth-RANKING CONTROLLER OBTAINS REPRESENTATIVE VOLTAGE FROM $(n-1)^{th}$-RANKING CONTROLLER

S1002 — CALCULATE MINIMUM VALUE AND AVERAGE VALUE OF REPRESENTATIVE VOLTAGES OBTAINED FROM $(n-1)^{th}$ RANK, RESPECTIVELY

S1003 — TRANSMIT AVERAGE VALUE OF REPRESENTATIVE VOLTAGES OF $(n-1)^{th}$ RANK TO $(n+1)^{th}$ RANK AS REPRESENTATIVE VOLTAGE OF nth RANK

S1004 — CALCULATE TARGET VOLTAGE OF $n^{th}$ RANK FROM DISCHARGE INSTRUCTION OF $(n+1)^{th}$ RANK AND REPRESENTATIVE VOLTAGE VALUE OF nth RANK

S1005 — IS TARGET VOLTAGE OF $n^{th}$ RANK SMALLER THAN MINIMUM VOLRAGE OF $(n-1)^{th}$ RANK?

YES → S1006 — SET TARGET VOLTAGE OF $n^{th}$ RANK AS REFERENCE $Vref_{(n)}$ OF BALANCE CONTROL

NO

S1007 — SET MINIMUM VALUE OF REPRESENTATIVE VOLTAGE OF $(n-1)^{th}$ RANK AS REFERENCE $Vref_{(n)}$ OF BALANCE CONTROL

S1008 — IS DIFFERENCE BETWEEN $Vref_{(n)}$ AND REPRESENTATIVE VOLTAGE OF ANY OF $(n-1)^{th}$ RANK EQUAL TO OR GREATER THAN THRESHOLD VALUE?

YES → S1009 — TRANSMIT DISCHARGE INSTRUCTION TO $(n-1)^{th}$-RANKING CONTROLLER HAVING REPRESENTATIVE VOLTAGE THAT EXCEEDS THRESHOLD VALUE

NO

S1010 — WITHOUT DISCHARGE INSTRUCTION (TRANSMIT 0 TO $(n-1)^{th}$ RANK AS DISCHARGE INSTRUCTION VALUE)

# FIG. 11

EP 2 709 201 A2

## FIG. 12

START

S1201 — n$^{th}$-RANKING CONTROLLER OBTAINS REPRESENTATIVE VOLTAGE FROM (n-1)$^{th}$-RANKING CONTROLLER

S1202 — CALCULATE MINIMUM VALUE OF REPRESENTATIVE VOLTAGES OBTAINED FROM (n-1)$^{th}$ RANK

S1203 — TRANSMIT MINIMUM VALUE OF REPRESENTATIVE VOLTAGES OF (n-1)$^{th}$ RANK TO (n+1)$^{th}$ RANK AS REPRESENTATIVE VOLTAGE OF nth RANK

S1204 — CALCULATE TARGET VOLTAGE OF n$^{th}$ RANK FROM DISCHARGE INSTRUCTION OF (n+1)$^{th}$ RANK AND REPRESENTATIVE VOLTAGE VALUE OF nth RANK

S1205 — IS TARGET VOLTAGE OF n$^{th}$ RANK SMALLER THAN MINIMUM VOLRAGE OF (n-1)$^{th}$ RANK?

YES → S1206 — SET TARGET VOLTAGE OF n$^{th}$ RANK AS REFERENCE Vref$_{(n)}$ OF BALANCE CONTROL

NO

S1207 — SET MINIMUM VALUE OF REPRESENTATIVE VOLTAGE OF (n-1)$^{th}$ RANK AS REFERENCE Vref$_{(n)}$ OF BALANCE CONTROL

S1208 — IS DIFFERENCE BETWEEN Vref$_{(n)}$ AND REPRESENTATIVE VOLTAGE OF ANY OF (n-1)$^{th}$ RANK EQUAL TO OR GREATER THAN THRESHOLD VALUE?

YES → S1209 — TRANSMIT DISCHARGE INSTRUCTION TO (n-1)$^{th}$-RANKING CONTROLLER HAVING REPRESENTATIVE VOLTAGE THAT EXCEEDS THRESHOLD VALUE

NO

WITHOUT DISCHARGE INSTRUCTION (TRANSMIT 0 TO (n-1)$^{th}$ RANK AS DISCHARGE INSTRUCTION VALUE)

S1210

FIG. 13

EP 2 709 201 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012202217 A

- JP 2010029050 A